(19)

Europäisches
Patentamt

European
Patent Office

Office européen
des brevets

(11)    **EP 2 357 816 B1**

(12)    **EUROPEAN PATENT SPECIFICATION**

(45) Date of publication and mention
of the grant of the patent:
**19.09.2012   Bulletin 2012/38**

(51) Int Cl.:
***H04N 7/035*** (2006.01)

(21) Application number: **10150314.2**

(22) Date of filing: **08.01.2010**

(54) **Decoder and method for adaptively generating a clock window**

Decodierer und Verfahren zur adaptiven Erzeugung eines Taktfensters

Décodeur et procédé pour générer adaptivement une fenêtre d'horloge

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**17.08.2011   Bulletin 2011/33**

(73) Proprietor: **Himax Media Solutions, Inc.
Taiwan (TW)**

(72) Inventor: **Tsail, Tien-Ju
74445 Sinshih Township (TW)**

(74) Representative: **Karakatsanis, Georgios
Haft - Karakatsanis
Siegesstrasse 13
80802 München (DE)**

(56) References cited:
**EP-A1- 0 572 740      US-A- 5 371 545
US-A1- 2002 008 776    US-A1- 2004 223 083
US-A1- 2008 074 539    US-B1- 6 377 308**

Printed by Jouve, 75001 PARIS (FR)

**Description**

**BACKGROUND OF THE INVENTION**

**1. FIELD OF THE INVENTION**

The present invention generally relates to communications, and more particularly to dynamic clock window adaption in a video decoder.

**2. DESCRIPTION OF RELATED ART**

In a conventional analog broadcast television system, such as one using a NTSC (National Television System Committee), PAL (Phase Alternating Line) or SECAM (Séquentiel couleur à mémoire or Sequential Color with Memory) format, the transmitted video consists of a sequence of still pictures or frames. For example, the NTSC protocol specifies about 30 frames per second, while the PAL/SECAM schemes specify 25 frames per second. Each frame consists of hundreds of horizontal scan lines. For example, each frame in the NTSC arrangement consists of 525 scan lines, among which the odd-numbered lines form an odd field and the even-numbered lines form an even field. The scan lines in each frame consist of not only video information but also vertical synchronization information, which is transmitted during a vertical blanking interval (VBI). For example, the scan lines 1-22 in the NTSC system are vertical-synchronization lines for the odd field, and the scan lines 263-285 are vertical-synchronization lines for the even field. The vertical-synchronization lines are used for synchronization and equalization and carry no video information.

The VBI is needed in conventional analog broadcast television systems to allow magnetic coils to deflect the electron beam vertically in a cathode ray tube (CRT). Although no such need exists in modern digital televisions, the VBI, however, still exists in modern digital broadcast television systems for carrying supplemental information (commonly called datacasting), such that extra information other than the actual video information may be provided to viewers. Various kinds of information may be broadcasted during the VBI such as Teletext, Vertical Interval Time Code (VITC), closed captioning (CC), Copy Generation Management System (CGMS), Widescreen Signaling (WSS), Video Programming System (VPS), etc.

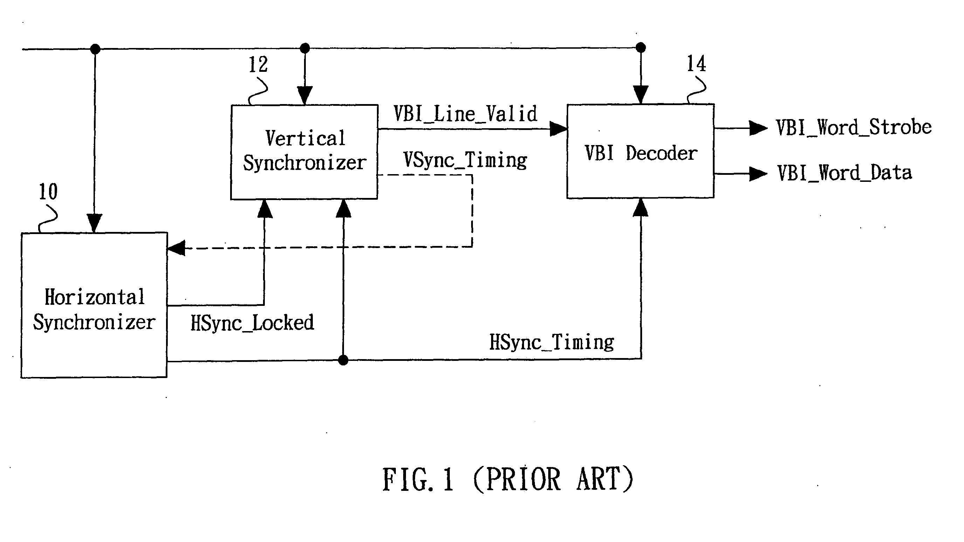

At the receiving end (e.g., at a digital television), a demodulator demodulates the received modulated signals, followed by a video decoder performing synchronization and information recovery. Fig. 1 is a block diagram of a video decoder, which includes, among other things, a horizontal synchronizer 10, a vertical synchronizer 12, and a VBI decoder 14. After the horizontal synchronizer 10 and the vertical synchronizer 12 have achieved respectively horizontal and vertical synchronization with the received video signals and, accordingly, generated a horizontal synchronization signal (HSync_Timing) and vertical synchronization signal (VSync_Timing), the VBI data (VBI_Word_Data) may be retrieved and recovered by the VBI decoder 14.

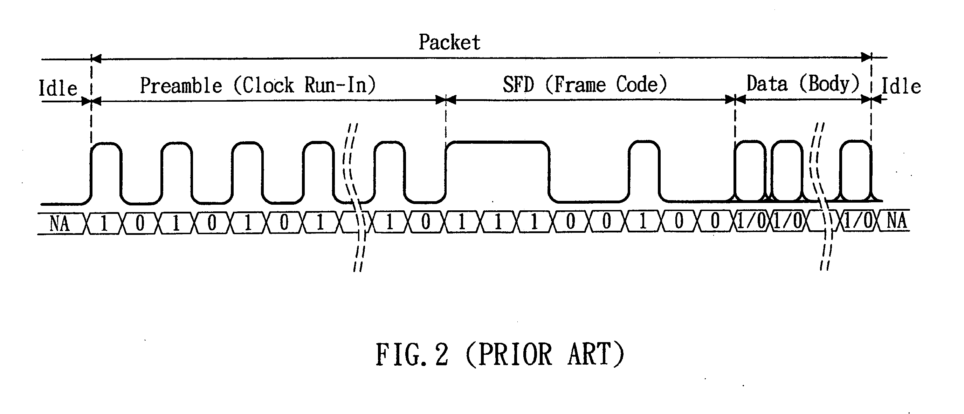

According to a VBI-related protocol and with reference to the known Open System Interconnection (OSI) model defining communications in terms of layers such as a data-link layer, a preamble, or a clock run-in, and a frame code, or a start-of-frame delimiter (SFD), are incorporated by the data-link layer preceding a data body that contains the transmitted VBI information. Fig. 2 is an exemplary waveform of such a transmitted packet. The preamble is used to assist the receiver in performing, for example, the signal level/channel estimation and synchronization. In addition, the frame code is used in the receiver to determine the beginning of the data body.

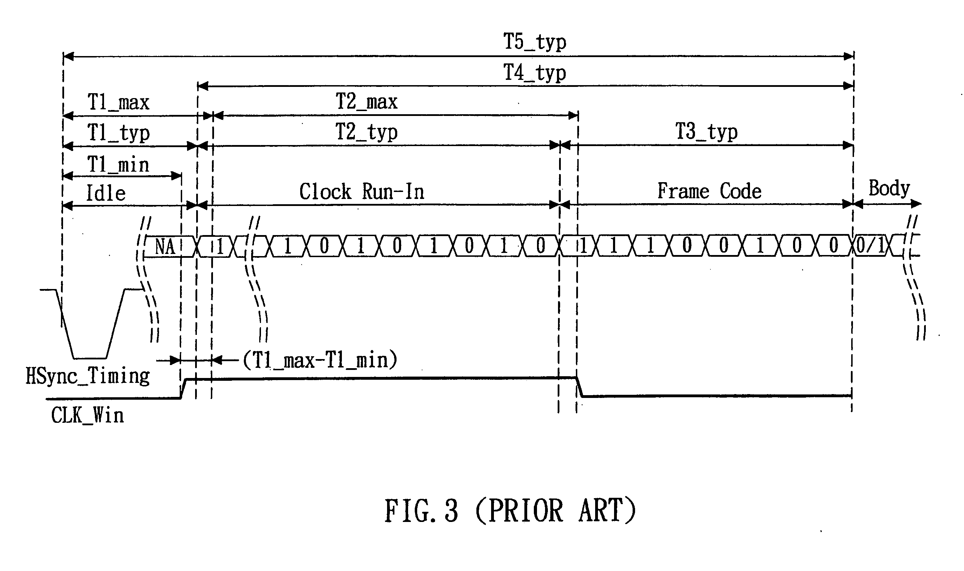

After the preamble is horizontally synchronized, the receiver defines and generates a clock window, or a timing window. During the active period of the clock window, symbol timing recovery for the clock run-in may be performed to recover the timing, or the clock, of the received video signal. In other words, the symbol timing recovery of the clock run-in is enclosed by the clock window. Fig. 3 illustrates a clock window (CLK_Win) along with a received packet. As shown, the clock run-in typically begins running at a time after time T1_typ has elapsed from the falling edge of the horizontal synchronization (HSync_Timing). In an exemplary Teletext System-B, the length of T1_typ may be 10. 1982$\mu$s. Further, the clock run-in typically lasts for time T2_typ, and the frame code typically lasts for time T3_typ, with T2_typ and T3_typ being as long as 16 symbols and 8 symbols respectively in the exemplary Teletext System-B and with the predefined symbol time being 0.1441441$\mu$s. T2 and T3 add up to T4 (i.e., 24 symbols), and T1 and T4 add up to T5. The below Table 1 shows the minimum, typical, and maximum values of the timing constraints T1 to T4 according to an exemplary system.

Table 1

| Timing constraint | Minimum ($\mu$s) | Typical ($\mu$s) | Maximum ($\mu$s) |
|---|---|---|---|
| T1 | (10.1982-1.0) | 10.1982 | (10.1982+0.4) |

(continued)

| Timing constraint | Minimum (µs) | Typical (µs) | Maximum (µs) |
|---|---|---|---|
| T2 | 16*(0.1441405) | 16*(0.1441441) | 16*(0.1441477) |
| T3 | 8*(0.1441405) | 8*(0.1441441) | 8*(0.1441477) |
| T4 | 24*(0.1441405) | 24*(0.1441441) | 24*(0.1441477) |

In Table 1, the symbol time 0.1441405µs for the minimum timing constraints and the symbol time 0.144147µs for the maximum timing constraints are determined according to acceptable deviation(s) of the symbol times among radio-frequency (RF) channels. Specifically, in the exemplary system, it is assumed that the proportion of the minimum/maximum deviation with respect to the predefined symbol time is 250 parts-per-million (ppm). Therefore, the minimum/maximum deviation is 0.0000036, that is 0.1441441*250ppm. Accordingly, the symbol time for the minimum timing constraints is 0.1441405µs, that is (0.1441441-0.0000036)µs, and the symbol time for the maximum timing constraints is 0.1441477µs, that is (0.1441441+0.0000036) µs.

Given considerations to various variations for a variety of distinct transmitters, normally, the clock window is asserted at a time after the minimum T1 (T1_min) has elapsed from the falling edge of the horizontal synchronization (HSync_Timing), and becomes de-asserted at a time after the maximum T1 plus the maximum T2 have elapsed from the falling edge of the horizontal synchronization (HSyn_Timing). Although such a loose and fixed-sized clock window may usually ensure that any clock run-in is covered within the clock window, the performance of the symbol timing recovery is, however, ineffective, particularly when the signal-to-noise ratio (SNR) of the received data is not sufficiently high.

UPS Patent No. 5371545 entitled "Auxiliary video data slicer with adjustable window for detecting the run in clock" discloses an auxiliary video data decoder that provides for correcting synchronization error between a sync signal and a video signal that may contain auxiliary video data. Cycles of a reference waveform included in the auxiliary video data are counted during a timing window to determine if synchronization is correct. The window timing is adjusted with respect to the sync signal. For the reason that the conventional clock window could not effectively facilitate symbol timing recovery for the clock run-in, a need has arisen to propose a novel scheme that may adaptively provide a proper, dynamic and thus more noise-immune clock window for symbol timing recovery.

## SUMMARY OF THE INVENTION

In view of the foregoing, it is an object of the present invention to provide a decoder and method for adaptively generating a clock window that may be adaptively adjusted to facilitate symbol timing recovery for any of a variety of distinct transmitters.

According to one embodiment, a falling edge of a horizontal synchronization signal is detected, and the time difference between an actual frame code and a predefined frame code is determined. The beginning and the end of the clock window are then adaptively determined based on the falling edge and the time difference, such that symbol timing recovery through received clock run-in signals may be performed within the generated clock window.

According to another embodiment, the decoder primarily includes a frame code searching unit, a clock window generator, and a symbol timing recovery unit. The frame code searching unit searches for a match between a predefined frame code and received data bits, and then generates a frame code control signal when the predefined frame code is matched. The clock window generator determines the beginning and the end of the clock window based on a falling edge of a horizontal synchronization signal and the frame code control signal, and determines the time difference between an actual frame code and the predefined frame code. The symbol timing recovery unit performs symbol timing recovery through the received clock run-in signals within the generated clock window.

## BRIEF DESCRIPTION OF THE DRAWINGS

Fig. 1 shows a block diagram of a conventional video decoder;
Fig. 2 shows an exemplary waveform of a conventional transmitted packet;
Fig. 3 shows a conventional clock window (CLK_Win) along with a received packet;
Fig. 4 shows a block diagram of a video decoder according to one embodiment of the present invention;
Figs. 5A and 5B show a flow diagram of adaptively generating a clock window; and
Fig. 6 shows an exemplary received packet and the clock window (CLK_Win) accompanying the flow of Fig. 5.

## DETAILED DESCRIPTION OF THE INVENTION

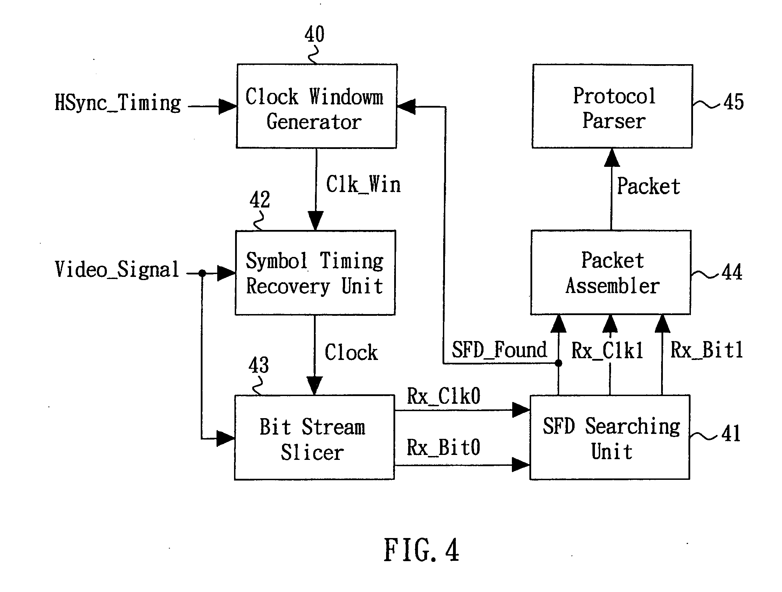

Turning to the drawings, shown in Fig. 4 according to one embodiment of the present invention is a block diagram of a vertical blanking interval (VBI) decoder. The embodiment illustrated here is suitable for use in recovering VBI data both in a digital receiver and in a general receiver of a typical telecommunication context.

In the embodiment, a clock window generator 40 adaptively generates a clock window (CLK_Win) according to a horizontal synchronization signal (HSync_Timing) and a frame-code control signal (SFD_Found) from a frame-code (start-of-frame delimiter, or SFD) searching unit 41. In the embodiment, the frame-code control signal (SFD_Found) is asserted or generated when the match between the received data bits and a predefined SFD pattern has been found. The clock window generator 40 will be described in detail later in this specification. The SFD searching unit 41 performs a full or a partial matching between the predefined SFD pattern and received data bits (Rx_BitO). Some implementations of the SFD searching unit 41 are disclosed in co-pending US Patent Application No. 12/618,953, published as US 2011-0119545 A1, filed on November 16, 2009 and entitled "Method and System of Receiving Data with Enhanced Partial Matching," which is assigned to the same assignee.

After determining the clock window (CLK_Win), a symbol timing recovering unit 42, such as a local oscillator, recovers the timing, or the clock, of the received video signal (Video_Signal) accordingly. The recovered clock, labeled as 'Clock', is provided to a bit stream slicer 43 for converting the received video signal (Video_Signal) to the data bits (Rx_BitO) and associated data clock (Rx_ClkO). Some exemplary circuits of the bit stream slicer 43 are disclosed in US Patent Application No. 12/498,345, published as US 2011-0004810 A1, filed on July 6, 2009 and entitled "Method and System of Receiving Data with Enhanced Error Correction," which is assigned to the same assignee.

After the frame-code match occurs, data (Rx_Bit1), such as VBI data, are retrieved from the data body and then packed into packets by a packet assembler 44. Subsequently, a protocol parser 45, usually in a data link-layer of the above-mentioned Open System Interconnection (OSI) model, interprets the packets and performs further functions, such as error detection and/or correction on the packets.

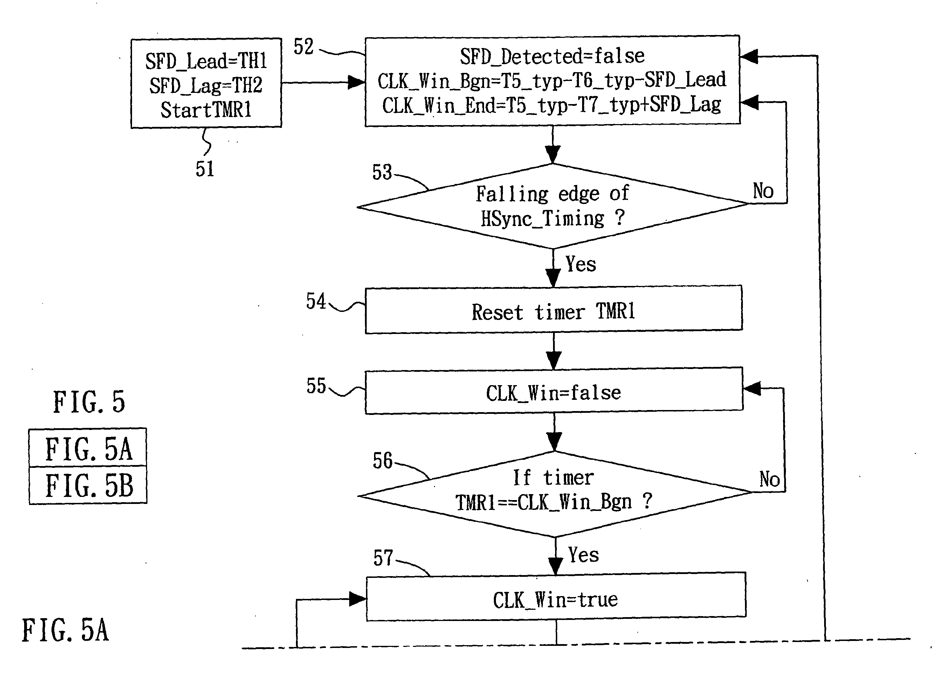

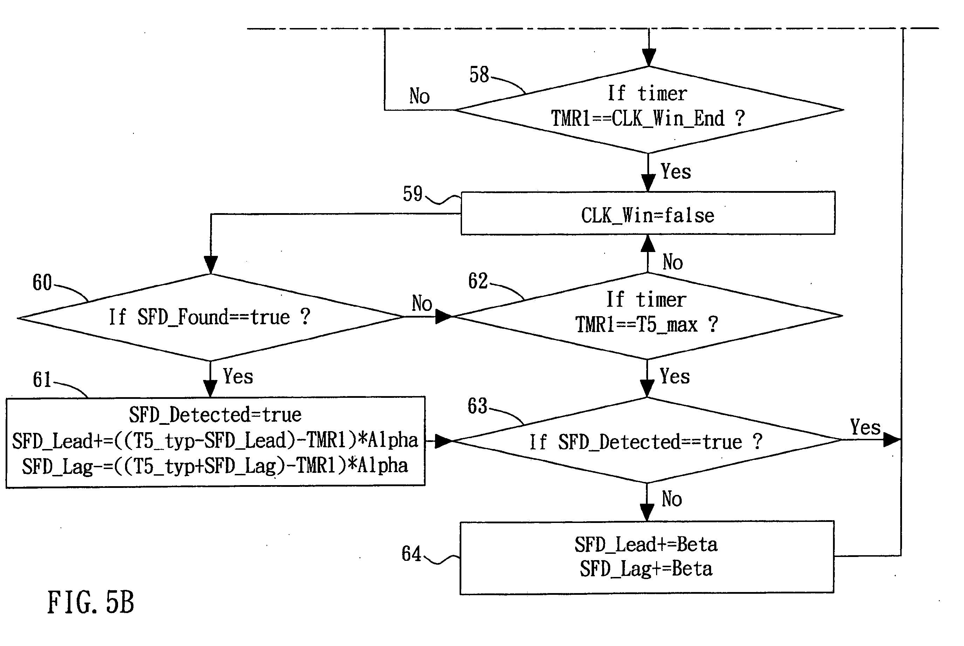

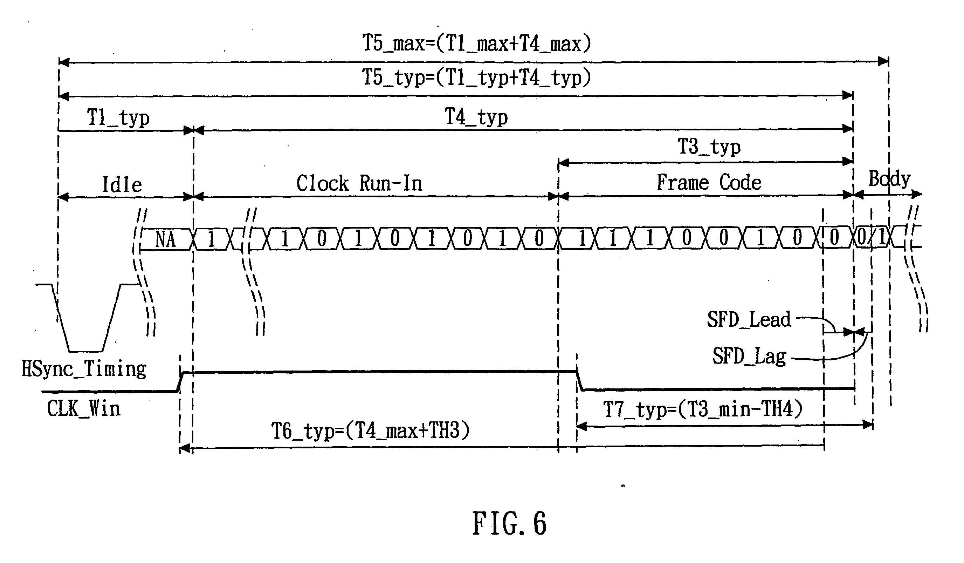

According to one aspect of the present embodiment, the clock window (CLK_Win) may be adaptively generated according to the flow diagram illustrated in Fig. 5. Illustrated in Fig. 6 is an exemplary received packet and the clock window (CLK_Win) accompanying the flow of Fig. 5. The timing constraints listed in the above Table 1 may also be adapted to Fig. 6. As used herein, "max" represents "maximum," "typ" represents "typical" and "min" represents "minimum."

In step 51, the variable SFD_Lead and the variable SFD_Lag are initialized with constant values TH1 and TH2, respectively. In the present embodiment, the variable SFD_Lead is used to represent the lead time of a leading actual SFD (i.e., leading SFD) ahead of an ideal or a predefined SFD, and the variable SFD_Lag is used to represent the lag time of the actual SFD (i.e., lagging SFD) behind the ideal or predetermined SFD. The variables SFD_Lead and SFD_Lag may be regarded as time differences between the actual SFD and the predefined SFD or the error signals of the actual SFD regarding the predefined SFD. It is noted that step 51 may be performed, for example, when the system is reset, or when the data source or the RF channel changes.

Afterward, in step 52, the beginning of the clock window (CLK_Win_Bgn) and the end of the clock window (CLK_Win_End) are defined as follows:

CLK_Win_Bgn=T5_typ-T6_typ-SFD_Lead, and
CLK_Win_End=T5_typ-T7_typ+SFD_Lag,
with T6 being defined as T4_max+TH3 and lasting from the beginning of the clock window (CLK_Win) until the end of the leading SFD and with T7 being defined as T3_min-TH4 and lasting from the end of the clock window (CLK_Win) until the end of the lagging SFD. TH3 and TH4 are constants. Both the beginning of the clock window (CLK_Win_Bgn) and the end of the clock window (CLK_Win_End) refer to the falling edge of the horizontal synchronization (HSync_Timing). A detected-SFD flag (SFD_Detected) is de-asserted in step 52. The detected-SFD flag (SFD_Detected) will be used later in the process flow.

As the variables SFD_Lead and SFD_Lag vary, through the reception cycles, in response to swings of the actual (real) SFDs, the beginning of the clock window (CLK_Win_Bgn) and the end of the clock window (CLK_Win_End) may then adaptively and correctly be adjusted based on previous values of the variables SFD_Lead end SFD_Lag accordingly. Furthermore, utilizing some statistical method such as, but not limited to, a least mean square (LMS) algorithm, the variables SFD_Lead and SFD_Lag may converge after a couple of reception cycles, thereby generating an optimal or near-optimal clock window (CLK_Win) that exactly and just covers the period of clock run-in, or covers the period of clock run-in with an acceptable additional tolerance range. The optimal or near-optimal clock window (CLK_Win) generated by the present invention has a width tighter than that of a typical conventional one as shown in Fig. 3. Those skilled in the art know that as the width of the clock window decreases, it is less affected by noise. In addition, the training period is finite and useful in data recovery. As the length of the clock window increases, however, fewer cycles are left for other training process. Therefore, the present invention is able to provide a clock window that is more noise-immune and effective at utilizing training sequences than the prior art.

Further, it is noted that, in the embodiment, the variable SFD_Lead is used to adaptively adjust the beginning of the window clock (CLK_Win_Bgn) with the variable SFD_Lag being used to adaptively adjust the end of the window clock (CLK_Win_End). However, it is appreciated by those skilled in the pertinent art that a single variable may be used instead, in another embodiment, to adaptively adjust the beginning or the end of the clock window (CLK_Win). For example, in an alternative embodiment, a single variable SFD_Lead is used to adaptively adjust the beginning of the window clock (CLK_Win_Bgn) while the entire length of the clock window (CLK_Win) is kept constant. The beginning of the clock window (CLK_Win_Bgn) and the end of the clock window (CLK_Win_End) may be defined as follows:

CLK_Win_Bgn=T5_typ-T6_typ-SFD_Lead, and
CLK_Win_End=CLK_Win_Bgn+T2_max,

with T2_max being a predefined maximum timing constraint lasting from the beginning of the clock window until the end of the clock window.

In a further embodiment, a single variable SFD_Lag is used to adaptively adjust the end of the window clock (CLK_Win_End) while the entire length of the clock window (CLK_Win) is kept constant. The beginning of the clock window (CLK_Win_Bgn) and the end of the clock window (CLK_Win_End) may be defined as follows:

CLK_Win_End=T5_typ-T7_typ+SFD_Lag, and
CLK_Win_Bgn=CLK_Win_End-T2_max.

Subsequently, as the falling edge of the horizontal synchronization (HSync_Timing) has been detected in step 53, a timer TMR1 is reset (step 54), and the clock window (CLK_Win) is de-asserted (step 55). When the timer TMR1 arrives at a time equal to the beginning of the clock window (CLK_Win_Bgn) (step 56), the clock window (CLK_Win) is asserted (step 57). Afterward, when the timer TMR1 arrives at a time equal to the end of the clock window (CLK_Win_End) (step 58), the clock window (CLK_Win) is de-asserted (step 59).

Subsequently, when a predefined SFD is found or matched (step 60), the detected-SFD flag (SFD_Detected) is asserted (step 61), and the variables SFD_Lead and SFD_Lag are updated using expressions as follows:

SFD_Lead +=((T5_typ-SFD_Lead-TMR1)*Alpha, and
SFD_Lag -=((T5_typ+SFD_Lag-TMR1)*Alpha,

with Alpha being a constant that represents a weighting in the LMS algorithm, the compound operator "+=" being used to increment the rightmost variable SFD_Lead (i.e., on the right-hand side) of its expression, and the compound operator "-=" being used to decrement the rightmost variable SFD_Lag (i.e., on the right-hand side) of its expression.

Searching for the SFD in step 60 is continuously performed provided that a maximum timing constraint T5 has not been reached (step 62). A situation of no SFD being found finally, with the detected-SFD flag (SFD_Detected) remaining de-asserted (the "No" branch of step 63), may indicate, for example, a data source interruption. To facilitate the convergence in the LMS algorithm, the variables SFD_Lead and SFD_Lag are incremented by a constant value, Beta, (step 64), and the flow is performed again.

Although specific embodiments have been illustrated and described, it will be appreciated by those skilled in the art that various modifications may be made without departing from the scope of the present invention, which is intended to be limited solely by the appended claims.

**Claims**

**1.** A method for adaptively generating a clock window (CLK_ Win) in a decoder, wherein symbol timing recovery through received clock run-in signals (Clock Run-In) may be performed within the generated clock window, the method comprising detecting a falling edge of a horizontal synchronization signal (HSync_Timing), **characterized in that**
a time difference (SFD_Lead or SFD_Lag) between an actual frame code and a predefined frame code (Frame Code) is determined, wherein the actual frame code is either a leading frame code ahead of the predefined frame code with a lead time (SFD_Lead) or a lagging frame code behind the predefined frame code with a lag time (SFD_ Lag), and wherein the time difference is either the lead time or the lag time; and
determining a beginning (CLK_Win_Bgn) and an end (CLK_Win_End) of the clock window based on the falling edge and the time difference.

2. The method of claim 1, wherein the time difference is determined by using a first variable (SFD_Lead) that represents a lead time of an actual leading frame code ahead of the predefined fame code and a second variable (SFD_Lag) that represents a lag time of an actual lagging frame code behind the predefined frame code.

3. The method of claim 2, wherein the time difference is determined at a time when the predefined frame code is matched with received data bits.

4. The method of claim 3, wherein the beginning of the clock window (CLK_Win_Bgn) and the end of the clock window (CLK_Win_End) are determined as follows:

$$\texttt{CLK\_Win\_Bgn=T5\_typ-T6\_typ-SFD\_Lead,}$$

and

$$\texttt{CLK\_Win\_End=T5\_typ-T7\_typ+SFD\_Lag,}$$

with T5_typ being a predefined typical timing constraint lasting from the falling edge of the horizontal synchronization signal until an end of the predefined frame code, T6_typ being a predefined typical timing constraint lasting from the beginning of the clock window until an end of the leading frame code, T7_typ being a predefined typical timing constraint lasting from the end of the clock window until an end of the lagging frame code, SFD_Lead being the first variable, and SFD_Lag being the second variable.

5. The method of claim 4, wherein at least one of the first variable and the second variable is updated using expressions as follows whenever the predefined frame code is matched with received data bits:

$$\texttt{SFD\_Lead +=((T5\_typ-SFD\_Lead-TMR1)*Alpha,}$$

and

$$\texttt{SFD\_Lag -=((T5\_typ+SFD\_Lag-TMR1)*Alpha,}$$

with Alpha being a constant, TMR1 being a time period from the falling edge of the horizontal synchronization signal until the match of the predefined frame code, the compound operator "+=." being used to increment the rightmost first variable SFD_Lead of its expression, and the compound operator "-=" being used to decrement the rightmost second variable SFD_Lag of its expression.

6. A decoder capable of adaptively generating a clock window (CLK_Win), comprising a frame code searching unit (41) configured to search for a match between a predefined frame code (Frame Code) and received data bits (Rx_BitO), and to generate a frame code control signal (SFD_Found) when the predefined frame code is matched with the received data bits, **characterized in that** a clock window generator (40) is adapted to determine a beginning (CLK_Win_Bgn) and an end (CLK_Win_End) of the clock window based on a falling edge of a horizontal synchronization signal (HSync_Timing) and the frame code control signal, and to determine a time difference (SFD_Lead or SFD_Lag) between an actual frame code and the predefined frame code, wherein the actual frame code is either a leading frame code ahead of the predefined frame code with a lead time (SFD_Lead) or a lagging frame code behind the predefined frame code with a lag time (SFD_Lag), and wherein the time difference is either the lead time or the lag time; and
a symbol timing recovery unit (42) is arranged to perform symbol timing recovery through received clock run-in signals (Clock Run-In) within the clock window, wherein the clock window is bounded between the beginning and the end determined by the clock window generator.

7. The decoder of claim 6, wherein the time difference is determined by using a first variable (SFD_Lead) that represents a lead time of an actual leading frame code ahead of the predefined frame code and a second variable (SFD_Lag) that represents a lag time of an actual lagging frame code behind the predefined frame code.

8. The decoder of claim 7, wherein the time difference is determined at a time when the frame code control signal is asserted.

9. The decoder of claim 8, wherein the beginning of the clock window (CLK_Win_Bgn) and the end of the clock window (CLK_Win_End) are determined as follows:

$$CLK\_Win\_Bgn = T5\_typ - T6\_typ - SFD\_Lead,$$

and

$$CLK\_Win\_End = T5\_typ - T7\_typ + SFD\_Lag,$$

with T5_typ being a predefined typical timing constraint lasting from the falling edge of the horizontal synchronization signal until an end of the predefined frame code, T6_typ being a predefined typical timing constraint lasting from the beginning of the clock window until an end of the leading frame code, T7_typ being a predefined typical timing constraint lasting from the end of the clock window until an end of the lagging frame code, SFD_Lead being the first variable, and SFD_Lag being the second variable.

10. The decoder of claim 9, wherein at least one of the first variable and the second variable is updated by the clock window generator using expressions as follows whenever the frame code control signal becomes asserted:

$$SFD\_Lead += ((T5\_typ - SFD\_Lead - TMR1)*Alpha,$$

and

$$SFD\_Lag -= ((T5\_typ + SFD\_Lag - TMR1)*Alpha,$$

with Alpha being a constant, TMR1 being a time period from the falling edge of the horizontal synchronization signal until the match of the predefined frame code, the compound operator "+=" being used to increment the rightmost first variable SFD_Lead of its expression, and the compound operator "-=" being used to decrement the rightmost second variable SFD_Lag of its expression.

**Patentansprüche**

1. Verfahren zur adaptiven Erzeugung eines Taktfensters (CLK_Win) in einem Decodierer, wobei innerhalb des erzeugten Taktfensters durch empfangene Takteinlaufsignale (Clock Run-In) eine Symboltaktrückgewinnung durchgeführt werden kann, wobei das Verfahren das Ermitteln einer fallenden Flanke eines horizontalen Synchronisationssignals (HSync_Timing) umfasst, **dadurch gekennzeichnet, dass**:

   eine Zeitdifferenz (SFD_Lead oder SFD_Lag) zwischen einem gegenwärtigen Rahmencode und einem vordefinierten Rahmencode (Frame Code) bestimmt wird, wobei der gegenwärtige Rahmencode entweder ein voreilender Rahmencode vor dem vordefinierten Rahmencode mit einer Voreilzeit (SFD_Lead) oder ein nacheilender Rahmencode nach dem vordefinierten Rahmencode mit einer Nacheilzeit (SFD_Lag) ist, und wobei die Zeitdifferenz entweder die Voreilzeit oder die Nacheilzeit ist; und
   Bestimmen eines Anfangs (CLK_Win_Bgn) und eines Endes (CLK_Win_End) des Taktfensters auf der Grundlage der fallenden Flanke und der Zeitdifferenz.

2. verfahren nach Anspruch 1, wobei die Zeitdifferenz unter Verwendung einer ersten Variablen (SFD_Lead), die eine Voreilzeit eines gegenwärtigen voreilenden Rahmencodes vor dem vordefinierten Rahmencode darstellt, und einer zweiten Variablen (SFD_Lag) bestimmt wird, die eine Nacheilzeit eines gegenwärtigen nacheilenden Rahmencodes nach dem vordefinierten Rahmencode darstellt.

3. Verfahren nach Anspruch 2, wobei die Zeitdifferenz an einem Zeitpunkt bestimmt wird, an dem der vordefinierte Rahmencode mit empfangenen Datenbits übereinstimmt.

4. Verfahren nach Anspruch 3, wobei der Anfang des Taktfensters (CLK_Win_Bgn) und das Ende des Taktfensters (CLK_Win_End) wie folgt bestimmt werden:

$$\text{CLK\_Win\_Bgn = T5\_typ - T6\_typ - SFD\_Lead,}$$

und

$$\text{CLK\_Win\_End = T5\_typ - T7\_typ + SFD\_Lag,}$$

wo T5_typ eine vordefinierte typische Taktbeschränkung ist, die von der fallenden Flanke des horizontalen Synchronisationssignals bis zu einem Ende des vordefinierten Rahmencodes dauert, T6_typ eine vordefinierte typische Taktbeschränkung ist, die vom Anfang des Taktfensters bis zu einem Ende des voreilenden Rahmencodes dauert, T7_typ eine vordefinierte typische Taktbeschränkung ist, die vom Ende des Taktfensters bis zu einem Ende des nacheilenden Rahmencodes dauert, wobei SFD_Lead die erste Variable ist und SFD_Lag die zweite Variable ist.

5. Verfahren nach Anspruch 4, wobei mindestens eine von der ersten Variablen und der zweiten Variablen immer unter Verwendung der folgenden Ausdrücke aktualisiert wird, wenn der vordefinierte Rahmencode mit empfangenen Datenbits übereinstimmt:

$$\text{SFD\_Lead += ((T5\_typ - SFD\_Lead - TMR1)*Alpha,}$$

und

$$\text{SFD\_Lag -= ((T5\_typ + SFD\_Lag - TMR1)*Alpha,}$$

wo Alpha eine Konstante ist, TMR1 ein Zeitraum von der fallenden Flanke des horizontalen Synchronisationssignals bis zur Übereinstimmung des vordefinierten Rahmencodes ist, der zusammengesetzte Operator "+=" verwendet wird, um die rechtskanonische erste Variable SFD_Lead seines Ausdrucks zu inkrementieren, und der zusammengesetzte Operator "-=" verwendet wird, um die reahtskanonische zweite Variable SFD_Lag seines Ausdrucks zu dekrementieren.

6. Decodierer, der geeignet ist, ein Taktfenster (CLK_Win) adaptiv zu erzeugen, und eine Rahmencode-Sucheinheit (41) umfasst, die konfiguriert ist, um eine Übereinstimmung zwischen einem vordefinierten Rahmencode (Frame Code) und empfangenen Datenbits (Rx_Bit0) zu suchen und ein Rahmencode-Steuersignal (SFD_Found) zu erzeugen, wenn der vordefinierende Rahmencode mit den empfangenen Datenbits übereinstimmt, **dadurch gekennzeichnet, dass** ein Taktfenstergenerator (40) angepasst ist, um auf der Grundlage einer fallenden Flanke eines horizontalen Synchronisationssignals (HSync_Timing) und des Rahmencode-Steuersignals einen Anfang (CLK_Win_Bgn) und ein Ende (CLK_Win_End) des Taktfensters zu bestimmen, und eine Zeitdifferenz (SFD_Lead oder SFD_Lag) zwischen einem gegenwärtigen Rahmencode und dem vordefinierten Rahmencode zu bestimmen, wobei der gegenwärtige Rahmencode entweder ein voreilender Rahmencode vor dem vordefinierten Rahmencode mit einer Voreilzeit (SFD_Lead) oder ein nacheilender Rahmencode nach dem vordefinierten Rahmencode mit einer Nacheilzeit (SFD_Lag) ist, und wobei die Zeitdifferenz entweder die Voreilzeit oder die Nacheilzeit ist; und eine Symboltaktrückgewinnungseinheit (42) angeordnet ist, um eine Symboltaktrückgewinnung durch empfangene Takteinlaufsignale (Clock Run-In) innerhalb des Taktfensters durchzuführen, wobei das Taktfenster zwischen dem durch den Taktfenstergenerator bestimmten Anfang und Ende begrenzt ist.

7. Decodierer nach Anspruch 6, wobei die Zeitdifferenz unter Verwendung einer ersten Variablen (SFD_Lead), die eine Voreilzeit eines gegenwärtigen voreilenden Rahmencodes vor dem vordefinierten Rahmencode darstellt, und einer zweiten Variablen (SFD_Lag) bestimmt wird, die eine Nacheilzeit eines gegenwärtigen nacheilenden Rahmencodes nach den vordefinierten Rahmencode darstellt.

8. Decodierer nach Anspruch 7, wobei die Zeitdifferenz an einem Zeitpunkt bestimmt wird, an dem das Rahmencode-Steuersignal aktiv ist.

9. Decodierer nach Anspruch 8, wobei der Anfang des Taktfensters (CLK_Win_Bgn) und das Ende des Taktfensters (CLK_Win_End) wie folgt bestimmt werden:

$$CLK\_Win\_Bgn = T5\_typ - T6\_typ - SFD\_Lead,$$

und

$$CLK\_Win\_End = T5\_typ - T7\_typ + SFD\_Lag,$$

wo T5_typ eine vordefinierte typische Taktbeschränkung ist, die von der fallenden Flanke des horizontalen Synchronisationssignals bis zu einem Ende des vordefinierten Rahmencodes dauert, T6_typ eine vordefinierte typische Taktbeschränkung ist, die vom Anfang des Taktfensters bis zu einem Ende des voreilenden Rahmencodes dauert, T7_typ eine vordefinierte typische Taktbeschränkung ist, die vom Ende des Taktfensters bis zu einem Ende des nacheilenden Rahmencodes dauert, wobei SFD_Lead die erste Variable ist und SFD_Lag die zweite Variable ist.

10. Decodierer nach Anspruch 9, wobei mindestens eine von der ersten Variablen und der zweiten Variablen durch den Taktfenstezgenerator immer unter Verwendung der folgenden Ausdrücke aktualisiert wird, wenn das Rahmencodesignal aktiviert wird:

$$SFD\_Lead + = ((T5\_typ - SFD\_Lead - TMR1)*Alpha,$$

und

$$SFD\_Lag - = ((T5\_typ + SFD\_Lag - TMR1)*Alpha,$$

wo Alpha eine Konstante ist, TMR1 ein Zeitraum von der fallenden Flanke des horizontalen Synchronisationssignals bis zur Übereinstimmung des vordefinierten Rahmencodes ist, der zusammengesetzte Operator "+=" verwendet wird, um die rechtskanonische erste Variable SFD_Lead seines Ausdrucks zu inkrementieren, und der zusammengesetzte Operator "-=" verwendet wird, um die rechtskanonische zweite Variable SFn_Lag seines Ausdrucks zu dekrementieren.

## Revendications

1. Procédé de génération adaptative d'une fenêtre d'horloge (CLK_Win) dans un décodeur, dans lequel la récupération de timing de symbole à travers des signaux de fonctionnement d'horloge reçus (Clock Run-in) peut être effectuée à l'intérieur de la fenêtre d'horloge générée, le procédé comprenant la détection d'un front de descente d'un signal de synchronisation horizontale (HSync_Timing), **caractérisé en ce que** une différence de temps (SFD_Lead ou SFD_Lag) entre un code de trame réel et un code de trame prédéfini (Frame Code) est déterminée, dans lequel le code de trame réel est soit un code de trame d' avance devant le code de trame prédéfini avec un temps d'avance (SFD_Lead) soit un code de trame de retard derrière le code de trame prédéfini avec un temps de retard (SFD_Lag) , et dans lequel la différence de temps est soit le temps d'avance soit le temps de retard ; et
la détermination d'un début (CLK_Win_Bgn) et d'une fin (CLK_Win_End) de la fenêtre d'horloge sur la base du front de descente et de la différence de temps.

2. Procédé selon la revendication 1, dans lequel la différence de temps est déterminée en utilisant une première variable (SFD_Lead) représentant un temps d'avance d'un code de trame d'avance réel devant le code de trame prédéfini et une deuxième variable (SFD_Lag) représentant un temps de retard d'un code de trame de retard réel derrière le code de trame prédéfini.

3. Procédé selon la revendication 2, dans lequel la différence de temps est déterminée au moment auquel le code de trame prédéfini correspond à des bits de données reçus.

4. Procédé selon la revendication 3, dans lequel le début de la fenêtre d'horloge (CLK_Win_Bgn) et la fin de la fenêtre d'horloge (CLK_Win_End) sont déterminés comme suit :

$$CLK\_Win\_Bgn = T5\_typ - T6\_typ - SFD\_Lead,$$

et

$$CLK\_Win\_End = T5\_typ - T7\_typ + SFD\_Lag,$$

où T5_typ est une contrainte de timing typique prédéfinie durant du front de descente du signal de synchronisation horizontale jusqu'à une fin du code de trame prédéfini, T6_typ est une contrainte de timing typique prédéfinie durant du début de la fenêtre d'horloge jusqu'à une fin du code de trame d' avance, T7_typ est une contrainte de timing typique prédéfinie durant de la fin de la fenêtre d'horloge jusqu'à une fin du code de trame de retard, SFD_Lead est la première variable, et sFD_Lag est la deuxième variable.

5. Procédé selon la revendication 4, dans lequel au moins l'une de la première variable et de la deuxième variable est mise à jour en utilisant des expressions comme suit, lorsque le code de trame prédéfini correspond à des bits de données reçus :

$$SFD\_Lead + = ((T5\_typ - SFD\_Lead - TMR1) * Alpha,$$

et

$$SFD\_Lag - = ((T5\_typ + SFD\_Lag - TMR1) * Alpha,$$

où Alpha est une constante, TMR1 est une période de temps du front de descente du signal de synchronisation horizontale jusqu'à la correspondance du code de trame prédéfini, l'opérateur composé « + = » est utilisé pour incrémenter la première variable la plus à droite SFD_Lead de son expression, et l'opérateur composé « - = » est utilisé pour décrémenter la deuxième variable la plus à droite SFD_Lag de son expression.

6. Décodeur capable d'effectuer la génération adaptative d'une fenêtre d'horloge (CLK_Win), comprenant une unité de recherche de code de trame (41) configurée pour rechercher une correspondance entre un code de trame prédéfini (Frame Code) et des bits de données reçus (Rx_Bit0), et pour générer un signal de commande de code de trame (SFD_Found) lorsque le code de trame prédéfini correspond aux bits de données reçus, **caractérisé en ce qu'**un générateur de fenêtre d'horloge (40) est apte à déterminer un début (CLK_Win_Bgn) et une fin (CLK_Win_End) de la fenêtre d'horloge sur la base d'un front de descente d'un signal de synchronisation horizontale (HSync_Timing) et du signal de commande de code de trame, et à déterminer une différence de temps (SFD_Lead ou SFD_Lag) entre un code de trame réel et le code de trame prédéfini, dans lequel le code de trame réel est soit un code de trame d'avance devant le code de trame prédéfini avec un temps d'avance (SFD_Lead) soit un code de trame de retard derrière le code de trame prédéfini avec un temps de retard (SFD_Lag), et dans lequel la différence de temps est soit le temps d'avance soit le temps de retard ; et

une unité de récupération de timing de symbole (42) est agencée pour effectuer la récupération de timing de symbole à travers des signaux de fonctionnement d'horloge reçus (Clock Run-in) à l'intérieur de la fenêtre d'horloge, dans lequel la fenêtre d'horloge est délimitée entre le début et la fin déterminés par le générateur de fenêtre d'horloge.

7. Décodeur selon la revendication 6, dans lequel la différence de temps est déterminée en utilisant une première variable (SFD_Lead) représentant un temps d'avance d'un code de trame d'avance réel devant le code de trame prédéfini et une deuxième variable (SFD_Lag) représentant un temps de retard d'un code de trame de retard réel derrière le code de trame prédéfini.

8. Décodeur selon la revendication 7, dans lequel la différence de temps est déterminée au moment auquel le signal de commande de code de trame est établi.

9. Décodeur selon la revendication 8, dans lequel le début de la fenêtre d'horloge (CLK_Win_Bgn) et la fin de la fenêtre d'horloge (CLK_Win_End) sont déterminés comme suit :

$$\texttt{CLK\_Win\_Bgn = T5\_typ - T6\_typ - SFD\_Lead,}$$

et

$$\texttt{CLK\_Win\_End = T5\_typ - T7\_typ + SFD\_Lag,}$$

où T5_typ est une contrainte de timing typique prédéfinie durant du front de descente du signal de synchronisation horizontale jusqu'à une fin du code de trame prédéfini, T6_typ est une contrainte de timing typique prédéfinie durant du début de la fenêtre d' horloge jusqu'à une fin du code de trame d' avance, T7_typ est une contrainte de timing typique prédéfinie durant de la fin de la fenêtre d'horloge jusqu'à une fin du code de trame de retard, SFD_Lead est à première variable, et SFD_Lag est la deuxième variable.

10. Décodeur selon la revendication 9, dans lequel au moins l'une de la première variable et de la deuxième variable est mise à jour par le générateur de fenêtre d'horloge en utilisant des expressions comme suit, lorsque le signal de commande de code de trame est établi :

$$\texttt{SFD\_Lead + = ((T5\_typ - SFD\_Lead - TMR1) * Alpha,}$$

et

$$\texttt{SFD\_Lag - = ((T5\_typ + SFD\_Lag - TMR1) * Alpha,}$$

où Alpha est une constante, TMR1 est une période de temps du front de descente du signal de synchronisation horizontale jusqu'à la correspondance du code de trame prédéfini, l'opérateur composé « + = » est utilisé pour incrémenter la première variable la plus à droite SFD_Lead de son expression, et l'opérateur composé « - = » est utilisé pour décrémenter la deuxième variable la plus à droite SFD_Lag de son expression.

FIG. 1 (PRIOR ART)

EP 2 357 816 B1

FIG. 2 (PRIOR ART)

FIG. 3 (PRIOR ART)

EP 2 357 816 B1

EP 2 357 816 B1

FIG. 4

EP 2 357 816 B1

FIG. 5

| FIG. 5A |
|---------|
| FIG. 5B |

FIG. 5A

```
SFD_Lead=TH1
SFD_Lag=TH2
StartTMR1
```

51

52

```
SFD_Detected=false
CLK_Win_Bgn=T5_typ-T6_typ-SFD_Lead
CLK_Win_End=T5_typ-T7_typ+SFD_Lag
```

53 — Falling edge of HSync_Timing ?  No

Yes

54 — Reset timer TMR1

55 — CLK_Win=false

56 — If timer TMR1==CLK_Win_Bgn ?  No

Yes

57 — CLK_Win=true

EP 2 357 816 B1

58 — If timer TMR1==CLK_Win_End ?

No

Yes

59 — CLK_Win=false

No

60 — If SFD_Found==true ?

No

62 — If timer TMR1==T5_max ?

Yes

Yes

61 — SFD_Detected=true
SFD_Lead+=((T5_typ-SFD_Lead)-TMR1)*Alpha
SFD_Lag-=((T5_typ+SFD_Lag)-TMR1)*Alpha

63 — If SFD_Detected==true ?

Yes

No

64 — SFD_Lead+=Beta
SFD_Lag+=Beta

FIG. 5B

FIG. 6

T5_max=(T1_max+T4_max)

T5_typ=(T1_typ+T4_typ)

T1_typ          T4_typ

T3_typ

Idle          Clock Run-In          Frame Code          Body

NA 1 1 0 1 0 1 0 1 0 1 1 1 0 0 1 0 0 0/1

HSync_Timing

CLK_Win

SFD_Lead

SFD_Lag

T6_typ=(T4_max+TH3)

T7_typ=(T3_min-TH4)

EP 2 357 816 B1

## REFERENCES CITED IN THE DESCRIPTION

**Patent documents cited in the description**

- US 5371545 A
- US 12618953 B
- US 20110119545 A1
- US 12498345 B
- US 20110004810 A1